# EUROPEAN PATENT SPECIFICATION

(11) **EP 4 284 883 B1**
(45) Date of publication and mention of the grant of the patent: **16.10.2024**
(21) Application number: 22704453.4
(22) Date of filing: 20.01.2022
(51) Int. Cl.: C09D 17/00, C09D 7/45, C08K 5/17, C08L 71/02, C09C 1/00, C09C 3/08, C09C 3/10, A01N 33/08, A01N 25/04, A01N 25/30, C09D 7/63, C09C 1/36, C08K 3/22, C09C 1/40, C08K 3/34

(54) **AQUEOUS BLEND OF PIGMENT AND AN ALKOXYLATED AMINE**
WÄSSRIGE MISCHUNG AUS PIGMENT UND ALKOXYLIERTEM AMIN
MÉLANGE AQUEUX DE PIGMENT ET D'AMINE ALCOXYLÉE

(30) Priority: 27.01.2021 US 202163142141 P
(43) Date of publication of application: 06.12.2023
(73) Proprietor: Rohm and Haas Company, Collegeville, PA 19426 (US)
(72) Inventor: FRANKEL, Erica A., Collegeville, Pennsylvania 19426 (US); CONLEY, Tara L., Collegeville, Pennsylvania 19426 (US)
(74) Representative: Beck Greener LLP
(86) International application number: PCT/US2022/013087
(87) International publication number: WO 2022/164703

(56) References cited:
- WO-A1-2015/097456
- US-A- 4 135 945
- US-A1- 2007 048 345
- US-A1- 2007 295 247
- US-A1- 2013 217 780

## Description

### Background of the Invention

The present invention relates to an aqueous blend of a pigment and an alkoxylated amine. The composition provides an aqueous blend of a pigment and an alkoxylated amine that is resistant to microbial growth in the absence of a biocide.

TiO₂ is the opacifying pigment of choice for paint formulations. TiO₂ can be added to a formulation as a dry powder or as an aqueous slurry. A slurry requires a preservative, most prevalently isothiazolinones, to prevent microbial contamination during production and storage. However, isothiazolinones are known skin sensitizers that have come under increased scrutiny by regulators for use in a variety of consumer products. In 2016, the European Commission issued a directive to limit the use of methylisothiazolinone (MIT) in most consumer products, including house paint. By 2021, the EU will not permit final formulations of these products to contain more than 15 ppm of MIT. These stringent restrictions present a challenge for paint formulators looking to control the amount of biocide in their final product. It would therefore be an advance in the art of architectural coatings to discover a way to preserve inorganic pigment containing slurries without using biocides.

### Summary of the Invention

The present invention addresses a need in the art by providing a composition according to claim 1 comprising, based on the weight of the composition, from 18 to 80 weight percent water, from 18 to 80 weight percent of a pigment, and from 50 ppm to 5000 ppm of a compound selected from Formula (Ia), or from Formula (Ib) or from Formula (1c) as detailed herein.

The present invention addresses a need in the art by providing an aqueous inorganic pigment solution or dispersion that does require biocide to resist promotion of microbial growth.

### Detailed Description of the Invention

The present invention is defined in claims 1-9 as attached.

Pigments include opacifying inorganic pigments such as TiO₂ and ZnO; inorganic extenders such as talc, clay, mica, sericite, nepheline syenite, feldspar, wollastonite, kaolinite, and diatomaceous earth; and inorganic and organic colorants such as phthalocyanine blue, phthalocyanine green, monoarylide yellow, diarylide yellow, benzimidazolone yellow, heterocyclic yellow, quinacridone magenta, quinacridone violet, metallized azo reds, nonmetallized azo reds, carbon black, lampblack, black iron oxide, yellow iron oxide, brown iron oxide, and red iron oxide. TiO₂ is an especially preferred opacifying inorganic pigment, and nepheline syenite is an especially preferred inorganic extender.

The preferred concentration of opacifying pigment, preferably TiO₂, is in the range of from 60, more preferably from 65, and most preferably from 70 weight percent to 79, more preferably to 78 weight percent, based on the weight of the composition. Correspondingly, the concentration of water in a TiO₂-water dispersion is preferably is in the range of from 19, more preferably from 20 weight percent, to 38, more preferably to 33, and most preferably to 28 weight percent, based on the weight of the composition. Where the pigment is an inorganic extender, preferably nepheline syenite, the preferred concentration is in the range of from 20 to 50 weight percent, and the preferred concentration of water is in the range of from 48 to 78 weight percent.

Said compound of Formula (Ia) has the following structure 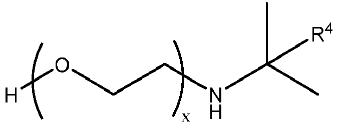 where R⁴ is C₆-C₁₄-alkyl, and x = 2 to 30, more preferably 2 to 10, and most preferably 2 to 5. Examples of commercial surfactants within the scope of Formula Ia include TRITON^{™} RW-20 (RW-20, x = 2, R⁴ = decyl), TRITON^{™} RW-50 (RW-50, x = 5, R⁴ = decyl), and TRITON^{™} RW-150 (RW-150, x = 15, R⁴ = decyl) Surfactants. (TRITON is a Trademark of The Dow Chemical Company or its Affiliates.)

In another aspect, the concentration of the compound of Formula I is from 100 ppm, in another aspect from 150 ppm, and in another aspect from 200 ppm; to preferably 2000 ppm, more preferably to 1500 ppm.

Said compound of Formula (Ib) has the following structure 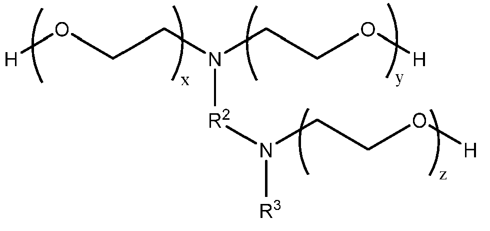 where R³ is saturated or partially saturated C₁₄-C₂₀-alkyl, more preferably saturated or partially saturated C₁₆-C₁₈-alkyl, and x + y + z = 2 to 32. As used herein, "partially unsaturated" refers to the presence of one or two double bond within the alkyl chain. Examples of commercial surfactants within the scope of Formula Ib include Ethox DT-15 (DT-15, x + y + z = 15); and Ethox DT-30 (DT-30, x + y + z = 30) Tallow diamines.

Said compound of Formula (Ic) has the following structure 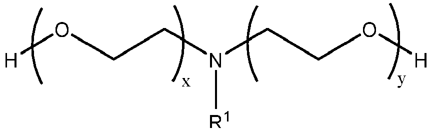 where is C₁₂-C₁₈-alkyl, and x + y = 12 to 18. An example of a commercial surfactant within the scope of Formula Ic is Ethox CAM-15 Cocoamine (CAM-15, x + y = 15). The pH of the composition is preferably in the range of from 8, more preferably from 8.5, to 10, more preferably to 9.5. The desired pH is conveniently achieved by addition of a neutralizer such as an alkali metal hydroxide, ammonia, an alkyl amine, or an alkanol amine.

The composition of the present invention may further include other materials such dispersants, surfactants, and humectants. Preferably the pigment, water, and the compound of Formula (Ia), or Formula (Ib) or Formula (Ic) comprise at least 98 weight percent of the composition.

It has been surprisingly discovered that slurries of pigments can be formulated in the absence of or substantial absence of biocides, yet remain unsusceptible to microbial contamination. Accordingly, the composition of the present invention comprises for all values of x and y less than 100 ppm, more preferably less than 20 ppm, more preferably less than 5 ppm, more preferably less than 1 ppm, and most preferably 0 ppm of a biocide such as an isothiazolinone, a triazine, an aldehyde, and a phenolic.

### Preparation of Samples for Microbial Resistance

All samples were prepared on a speedmixer (Flaktek, Inc.). Water, inorganic pigment, surfactant, and neutralizer were added and mixed at 1500 rpm for 2 min. Samples were inoculated 3 times at 7-d intervals with 10⁶-10⁷ colony forming units per milliliter of sample (CFU/mL) of a standard pool of bacteria, yeasts, and molds obtained from American Type Culture Collection (ATCC) that are common contaminants in coatings. Once inoculated, the samples were stored in 25 °C incubators. Test samples were monitored for microbial contamination by agar plating using a standard streak plate method. Samples were plated 1 d and 7 d after each microbial challenge onto trypticase soy agar (TSA) and potato dextrose agar (PDA) plates. All agar plates were checked daily up to 7 d after plating to determine the number of microorganisms surviving in the test samples. When not being checked, the agar plates were stored in incubators, 30 °C for TSA plates and 25 °C for PDA plates. The extent of microbial contamination was established by counting the colonies, where the rating score was determined from the number of microbial colonies observed on the agar plates. Reported results come from day 7 readings. Results are described by the rating score for each type of microorganism: B = bacteria, Y = yeast, and M = mold. For example, a 3B describes a plate with 3 rating score for bacteria, or a Tr Y(1) describes a plate with trace yeast (1 colony on plate). Table 1 illustrates the rating system used to estimate the level of microbial contamination on streak plates. Colonies refers to the number of colonies on the plate.

**Table 1 - Rating system for estimating microbial contamination**

| Colonies | Rating Score | Contamination | Result |
|---|---|---|---|
| None | 0 | None | Pass |
| 1-9 | Tr | Trace | Pass |
| 10 to 99 | 1 | Very Light | Fail |
| 100 to ∼1000 | 2 | Light | Fail |
| ∼1000 to 10,000 | 3 | Moderate | Fail |
| >10,000 | 4 | Heavy | Fail |

### Examples

In Table 1, "Pass" means that no microbial growth was detected on plates 14 d after the inoculation. "Fail means that more than five distinct colonies were detected on plates 14 days d inoculation. C1, C2 and C3 refer to challenge 1, challenge 2 and challenge 3. A sample that failed challenges 1 and 2 was not subjected to challenge 3. TiO₂ refers to Ti-Pure R-706 Titanium Dioxide, RW-20 refers to TRITON^{™} RW-20 Surfactant, (A Trademark of The Dow Chemical Company or its Affiliates), and Minex 4 refers to Minex 4 nepheline syenite.

**Table 1 - Slurry Formulations with and without Ethoxylated Amine**

| Comp. 1 | Pigment | RW-20 | C1 | C2 | C3 |
|---|---|---|---|---|---|
| Ex. 1 | TiO₂ | none | Fail | Fail | NA |
| Ex. 2 | TiO₂ | 250 ppm | Pass | Pass | Pass |
| Ex. 3 | TiO₂ | 5000 ppm | Pass | Pass | Pass |
| Ex. 4 | Minex 4 | 1250 ppm | Pass | Pass | Pass |

The data show the impact of the ethoxylated amine of suppression of microbial growth over three challenge tests.

## Claims

1. A composition comprising, based on the weight of the composition,
from 18 to 80 weight percent water,
from 18 to 80 weight percent of a pigment,
and from 50 ppm to 5000 ppm of a compound of Formula Ia, or of Formula Ib, or of Formula Ic: 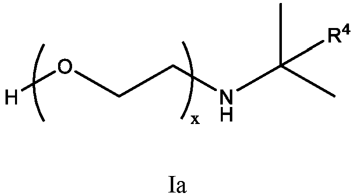
where R⁴ = C₆-C₁₄-alkyl, and x = 2 to 30; 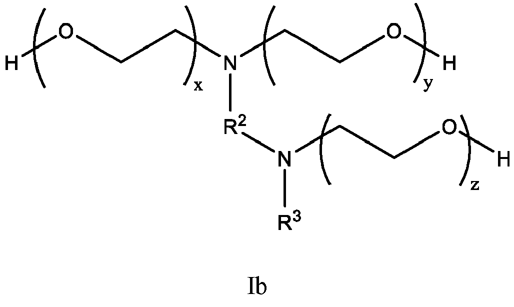
where R³ is saturated or partially unsaturated C₁₄-C₂₀-alkyl, and x + y + z = 2 to 32; 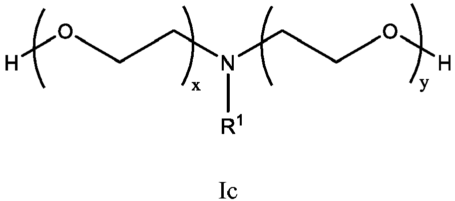
where R¹ is C₁₂-C₁₈-alkyl, and x + y = 12 to 18;
and
with the proviso that the water and the pigment comprise at least 95 percent by weight of the composition; and
with the further proviso that for all values of x and y the composition comprises less than 100 ppm of a biocide.

2. The composition of Claim 1 which is an aqueous dispersion of an opacifying pigment having a concentration in the range of from 60 to 79 weight percent, based on the weight of the composition; wherein the composition has a pH in the range of from 8 to 10.

3. The composition of Claim 2 wherein the opacifying pigment is TiO₂ having a concentration in the range of from 70 to 78 weight percent, based on the weight of the composition; wherein the concentration of the water is in the range of from 20 to 28 percent; wherein the concentration of the compound of Formula Ia or Ib or Ic is in the range of from 50 ppm to 2000 ppm; and wherein the composition has a pH in the range of 8.5 to 9.5;
wherein the composition further comprises one or more materials selected from the group consisting of dispersants, surfactants, and humectants; and wherein the TiO₂, the water, and the compound of Formula I comprise at least 98 weight percent of the composition.

4. The composition of Claim 1 wherein the compound of Formula Ia is present and R⁴ is decyl and x = 2 to 10.

5. The composition of Claim 1 wherein the pigment is an inorganic extender.

6. The composition of Claim 5 wherein the inorganic extender is nepheline syenite having a concentration in the range of from 20 to 50 weight percent; wherein the concentration of water is in the range of from 48 to 78 weight percent; wherein the compound of Formula Ia is present; wherein the concentration of the compound of Formula Ia is in the range of from 50 ppm to 2000 ppm; wherein the composition further comprises one or more materials selected from the group consisting of dispersants, surfactants, and humectants; and wherein the nepheline syenite, the water, and the compound of Formula Ia comprise at least 98 weight percent of the composition.

7. The composition of Claim 1 wherein the pigment is a colorant.

8. The composition Claim 1 which comprises less than 20 ppm of a biocide.

9. The composition of Claim 8 which comprises 0 ppm of a biocide.

## Patentansprüche

1. Zusammensetzung, umfassend, basierend auf dem Gewicht der Zusammensetzung,
zu von 18 bis 80 Gewichtsprozent Wasser,
zu von 18 bis 80 Gewichtsprozent ein Pigment;
und zu von 50 ppm bis 5000 ppm eine Verbindung der Formel Ia oder der Formel Ib oder der Formel Ic: 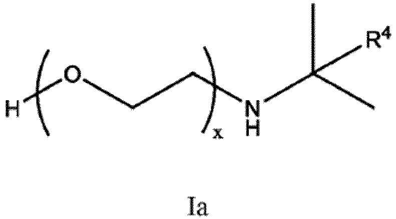
wobei R⁴ = C₆-C₁₄-Alkyl und x = 2 bis 30; 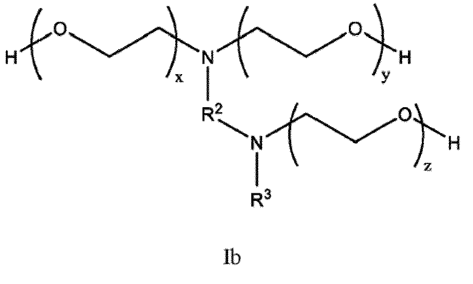
wobei R³ gesättigtes oder teilweise ungesättigtes C₁₄-C₂₀-Alkyl ist und x + y + z = 2 bis 32; 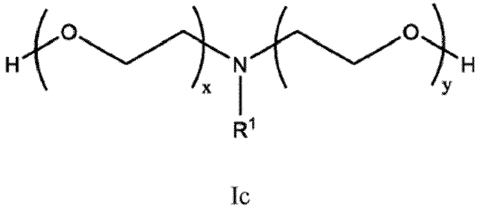
wobei R¹ C₁₂-C₁₈-Alkyl ist und x + y = 12 bis 18;
und
mit der Maßgabe, dass das Wasser und das Pigment mindestens 95 Gewichtsprozent der Zusammensetzung ausmachen; und
mit der weiteren Maßgabe, dass die Zusammensetzung für sämtliche Werte von x und y zu weniger als 100 ppm ein Biozid umfasst.

2. Zusammensetzung nach Anspruch 1, die eine wässrige Dispersion eines Trübungspigments ist, das eine Konzentration in dem Bereich von 60 bis 79 Gewichtsprozent, basierend auf dem Gewicht der Zusammensetzung, aufweist; wobei die Zusammensetzung einen pH-Wert in dem Bereich von 8 bis 10 aufweist.

3. Zusammensetzung nach Anspruch 2, wobei das Trübungspigment TiO₂ ist, das eine Konzentration in dem Bereich von 70 bis 78 Gewichtsprozent, basierend auf dem Gewicht der Zusammensetzung, aufweist; wobei die Konzentration des Wassers in dem Bereich von 20 bis 28 Prozent liegt; wobei die Konzentration der Verbindung der Formel Ia oder Ib oder Ic in dem Bereich von 50 ppm bis 2000 ppm liegt; und wobei die Zusammensetzung einen pH-Wert in dem Bereich von 8,5 bis 9,5 aufweist;
wobei die Zusammensetzung ferner ein oder mehrere Materialien umfasst, die aus der Gruppe ausgewählt sind, bestehend aus Dispergiermitteln, Tensiden und Feuchthaltemitteln; und wobei das TiO₂, das Wasser und die Verbindung der Formel I mindestens 98 Gewichtsprozent der Zusammensetzung ausmachen.

4. Zusammensetzung nach Anspruch 1, wobei die Verbindung der Formel Ia vorhanden ist und R⁴ Decyl ist und x = 2 bis 10.

5. Zusammensetzung nach Anspruch 1, wobei das Pigment ein anorganischer Füllstoff ist.

6. Zusammensetzung nach Anspruch 5, wobei der anorganische Füllstoff Nephelinsyenit ist, der eine Konzentration in dem Bereich von 20 bis 50 Gewichtsprozent aufweist; wobei die Konzentration von Wasser in dem Bereich von 48 bis 78 Gewichtsprozent liegt; wobei die Verbindung der Formel Ia vorhanden ist; wobei die Konzentration der Verbindung der Formel Ia in dem Bereich von 50 ppm bis 2000 ppm liegt; wobei die Zusammensetzung ferner ein oder mehrere Materialien umfasst, die aus der Gruppe ausgewählt sind, bestehend aus Dispergiermitteln, Tensiden und Feuchthaltemitteln; und wobei der Nephelinsyenit, das Wasser und die Verbindung der Formel Ia mindestens 98 Gewichtsprozent der Zusammensetzung ausmachen.

7. Zusammensetzung nach Anspruch 1, wobei das Pigment ein Farbstoff ist.

8. Zusammensetzung nach Anspruch 1, die zu weniger als 20 ppm ein Biozid umfasst.

9. Zusammensetzung nach Anspruch 8, die zu 0 ppm ein Biozid umfasst.

## Revendications

1. Composition comprenant, sur la base du poids de la composition,
de 18 à 80 pour cent en poids d'eau,
de 18 à 80 pour cent en poids d'un pigment,
et de 50 ppm à 5000 ppm d'un composé de Formule la, ou de Formule Ib, ou de Formule le : 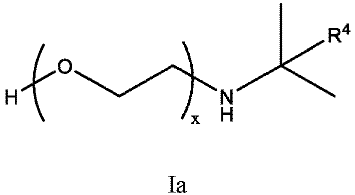
où R⁴ = alkyle en C₆-C₁₄, et x = 2 à 30 ; 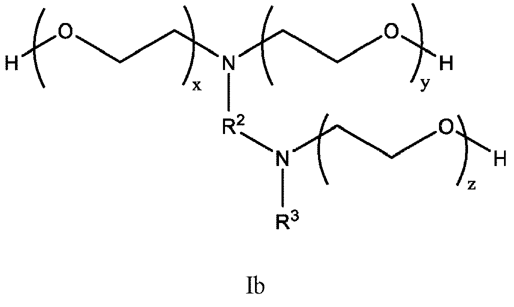
où R³ est alkyle en C₁₄-C₂₀ saturé ou partiellement insaturé, et x + y + z = 2 à 32 ; 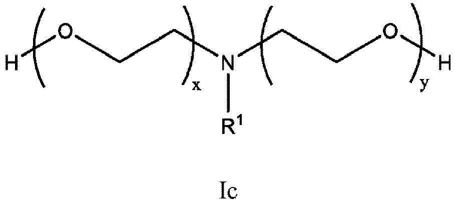
où R¹ est alkyle en C₁₂-C₁₈, et x + y = 12 à 18 ;
et
à condition que l'eau et le pigment représentent au moins 95 pour cent en poids de la composition ; et
à condition que, pour toutes les valeurs de x et y, la composition comprenne moins de 100 ppm d'un biocide.

2. Composition selon la revendication 1, qui est une dispersion aqueuse d'un pigment opacifiant ayant une concentration comprise dans la plage allant de 60 et 79 pour cent en poids, sur la base du poids de la composition ; dans laquelle la composition a un pH compris dans la plage allant de 8 à 10.

3. Composition selon la revendication 2, dans laquelle le pigment opacifiant est TiO₂ ayant une concentration comprise dans la plage allant de 70 à 78 pour cent en poids, sur la base du poids de la composition ; dans laquelle la concentration de l'eau est comprise dans la plage allant de 20 à 28 pour cent ; dans laquelle la concentration du composé de Formule la ou Ib ou le est comprise dans la plage allant de 50 ppm à 2000 ppm ; et dans laquelle la composition a un pH compris dans la plage de 8,5 à 9,5 ;
dans laquelle la composition comprend en outre un ou plusieurs matériaux choisis dans le groupe constitué de dispersants, agents tensioactifs, et humectants ; et dans laquelle le TiO₂, l'eau, et le composé de Formule I représentent au moins 98 pour cent en poids de la composition.

4. Composition selon la revendication 1, dans laquelle le composé de Formule la est présent et R⁴ est décyle et x = 2 à 10.

5. Composition selon la revendication 1, dans laquelle le pigment est un diluant inorganique.

6. Composition selon la revendication 5, dans laquelle le diluant inorganique est une syénite néphélinique ayant une concentration comprise dans la plage allant de 20 à 50 pour cent en poids ; dans laquelle la concentration de l'eau est comprise dans la plage allant de 48 à 78 pour cent en poids cent ; dans laquelle le composé de Formule la est présent ; dans laquelle la concentration du composé de Formule la est comprise dans la plage allant de 50 ppm à 2000 ppm ; dans laquelle la composition comprend en outre un ou plusieurs matériaux choisis dans le groupe constitué de dispersants, agents tensioactifs, et humectants ; et dans laquelle la syénite néphélinique, l'eau, et le composé de Formule la représentent au moins 98 pour cent en poids de la composition.

7. Composition selon la revendication 1, dans laquelle le pigment est un colorant.

8. Composition selon la revendication 1, qui comprend moins de 20 ppm d'un biocide.

9. Composition selon la revendication 8, qui comprend 0 ppm de biocide.
